# EUROPEAN PATENT APPLICATION

(11) **EP 4 843 889 A1**
(43) Date of publication of application: **25.11.2026**
(21) Application number: 25923127.2
(22) Date of filing: 06.11.2025
(51) Int. Cl.: B64D 1/16, A62C 27/00, B64D 27/35, B64U 10/13, B64U 10/60, B64U 20/80, B64U 101/47

(54) **DRONE FIRE EXTINGUISHING DEVICE**

(30) Priority: 10.09.2025 JP 2025149760
(71) Applicant: SYNCA GROUP, LTD, 192-0045 Tokyo (JP)
(72) Inventor: NAKAZAWA, Hideta, Hachioji-shi, Tokyo 192-0045 (JP)
(74) Representative: Bandpay & Greuter
(86) International application number: PCT/JP2025/038855
(87) International publication number: WO 2026/163551

(57) **Abstract**

The present invention enables extinguishing fires at multiple locations. A drone fire extinguishing apparatus 1 comprises a flyable drone unit 11, an upper water storage tank 12 that stores water to be supplied to a tip-end-side drone fire extinguishing apparatus 1, and a lower water storage tank 13 connected to the upper water storage tank 12 and having a plurality of discharge holes for discharging the stored water, and is capable of selectively assuming a linked state (first state) in which it supplies water to the tip-end-side drone fire extinguishing apparatus 1 without discharging water from the lower water storage tank 13, a water discharge state (second state) in which it discharges water from the lower water storage tank 13 without supplying water to another drone fire extinguishing apparatus, and a linked water discharge state (third state) in which it discharges water from the lower water storage tank 13 while supplying water to the tip-end-side drone fire extinguishing apparatus.

## Description

### CROSS-REFERENCE TO RELATED APPLICATION

This application is the national phase entry of International Application PCT/JP2025/038855, filed on November 6, 2025. The entire contents of the foregoing application are incorporated herein by reference.

### TECHNICAL FIELD

The present invention relates to a drone fire extinguishing apparatus.

### BACKGROUND ART

A drone system that uses a drone to transport liquid (for example, water or fire extinguishing liquid) from a remote location to a demand site for purposes such as extinguishing forest fires is known. For example, the system comprises a transport pipe through which liquid or gas flows, a pump device disposed at a remote location to supply the liquid or gas to the transport pipe, a top drone holding a nozzle connected to the tip of the transport pipe, multiple pump drones disposed along the transport pipe and incorporating pumps to increase the pressure of the liquid or gas flowing through the transport pipe, and a power supply device that supplies power to the top drone and the pump drones via power cables. The transport pipe is formed by connecting multiple conduits via the pumps of the pump drones. Each pump drone comprises a pump drone body and a connecting mechanism that connects the pump to the pump drone body in a tiltable and/or rotatable manner.

### CITATION LIST

### Patent Literature

PTL 1: Japanese Laid-open Patent Publication No. 2020-131960 PTL 2: Japanese Patent No. 6987446

### SUMMARY OF INVENTION

### Technical Problem

When power is supplied to a drone via a power cable, the cable adds weight. In addition, the flight distance of the drone is limited by the length of the cable. Furthermore, fire sources are not limited to a single location and may extend to multiple dispersed locations. In one aspect, an object of the present invention is to enable extinguishing of fires at multiple locations.

### Solution to Problem

According to one aspect, there is provided a drone fire extinguishing apparatus. This drone fire extinguishing apparatus comprises: a drone; a first water storage unit that stores fire extinguishing liquid to be supplied to another drone fire extinguishing apparatus; and a second water storage unit connected to the first water storage unit and having a plurality of discharge holes for discharging the fire extinguishing liquid stored therein, and is capable of selectively assuming a first state in which fire extinguishing liquid is not discharged from the second water storage unit and is supplied to another drone fire extinguishing apparatus, a second state in which fire extinguishing liquid is not supplied to another drone fire extinguishing apparatus and is discharged from the second water storage unit, and a third state in which fire extinguishing liquid is supplied to another drone fire extinguishing apparatus while being discharged from the second water storage unit.

### Advantageous Effects of Invention

According to one aspect, it is possible to extinguish fires at multiple locations. The above and other objects, features, and advantages of the present invention will become apparent from the following description in conjunction with the accompanying drawings, which illustrate, by way of example, preferred embodiments of the present invention.

### BRIEF DESCRIPTION OF DRAWINGS

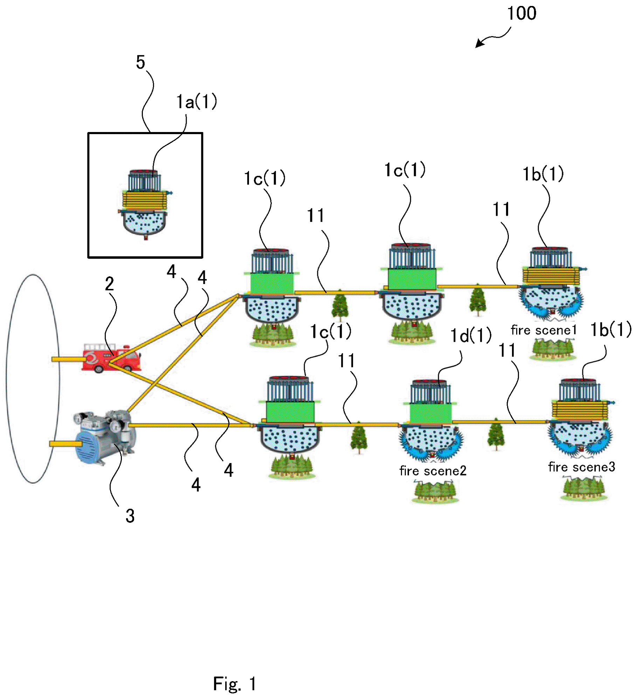

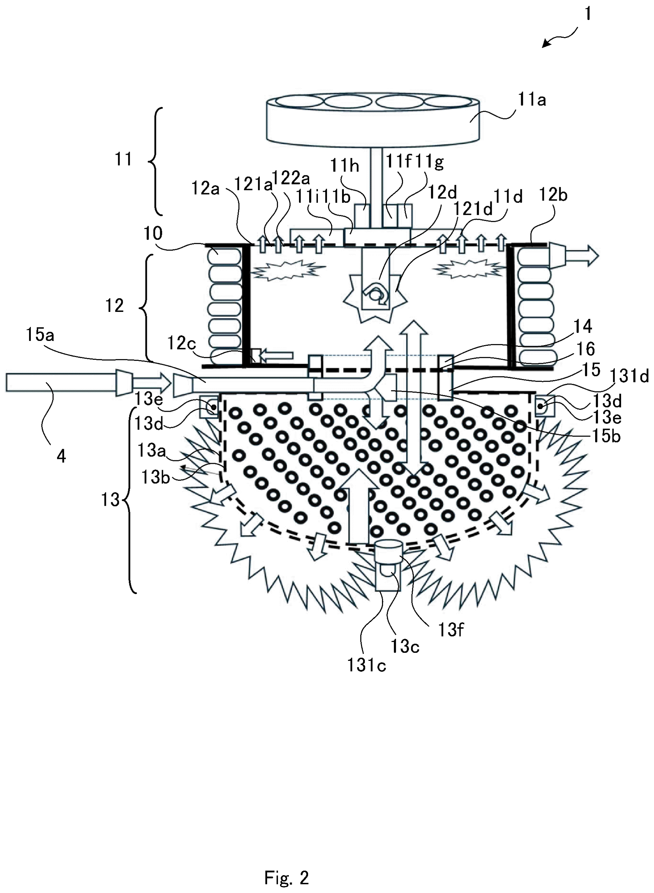

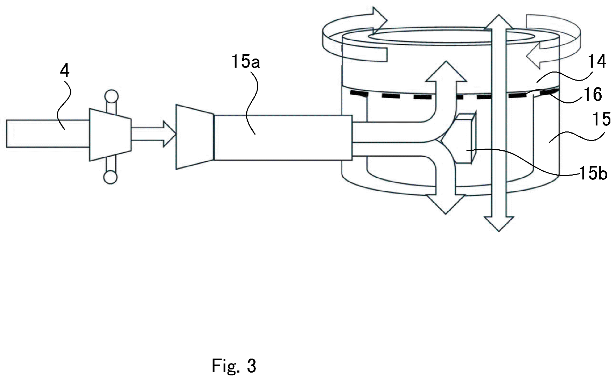

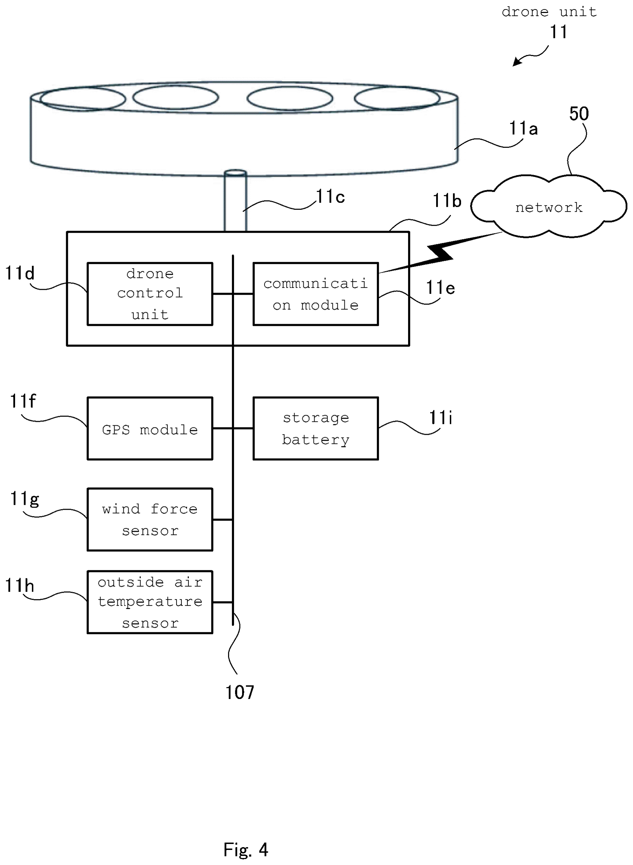

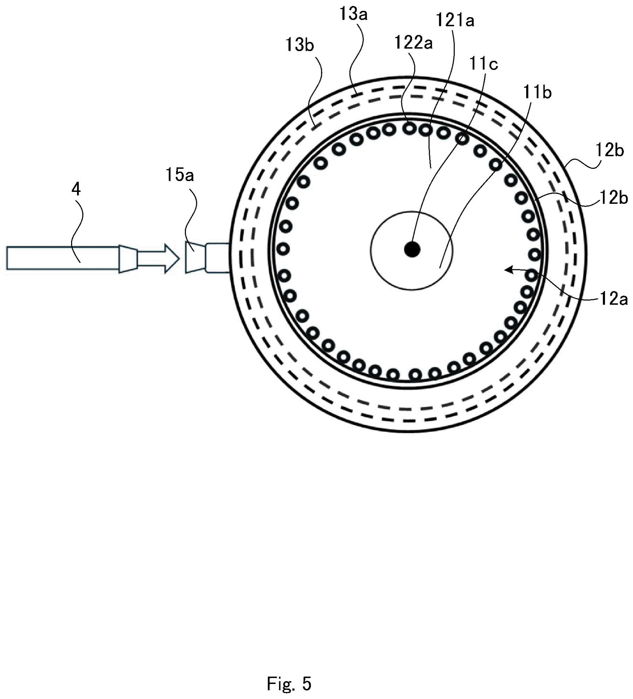

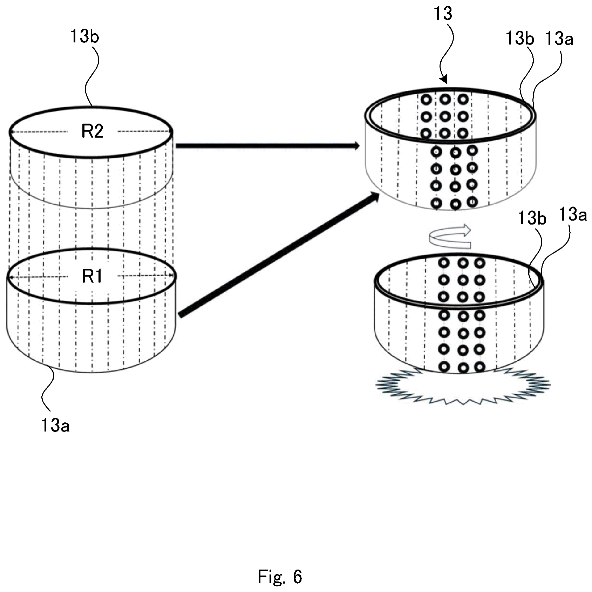

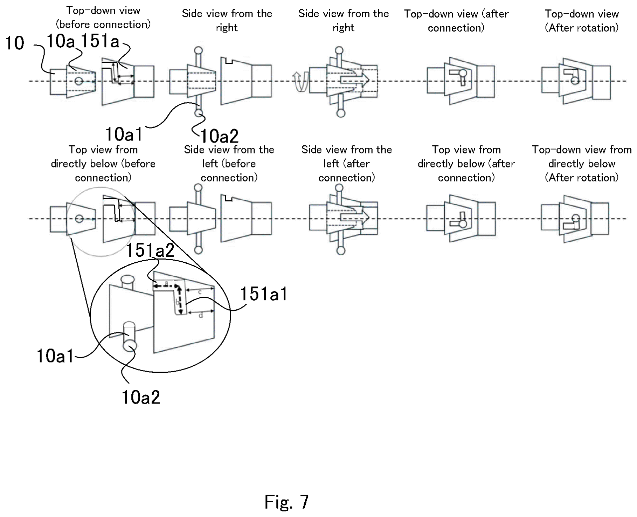

Fig. 1 is a diagram illustrating a drone fire extinguishing system according to an embodiment. Fig. 2 is a diagram illustrating the structure of the drone fire extinguishing apparatus according to the embodiment. Fig. 3 is a diagram illustrating a water flow channel. Fig. 4 is a diagram illustrating the drone unit according to the embodiment. Fig. 5 is a schematic plan view of the upper water storage tank and the lower water storage tank according to the embodiment. Fig. 6 is a diagram illustrating the operation of the lower water storage tank according to the embodiment. Fig. 7 is a diagram illustrating a method of connecting a linking hose and a hose connection pipe according to the embodiment.

### DESCRIPTION OF EMBODIMENTS

Hereinafter, the drone fire extinguishing apparatus according to the embodiment of the present invention will be described in detail with reference to the drawings.

The positions, sizes, shapes, and ranges of the components shown in the following drawings and the like may not represent the actual positions, sizes, shapes, and ranges in order to facilitate understanding of the invention. Therefore, the present invention is not necessarily limited to the positions, sizes, shapes, ranges, etc., disclosed in the drawings. Elements expressed in the singular shall include the plural unless clearly indicated otherwise in the text.

### (Embodiment)

Fig. 1 is a diagram illustrating the drone fire extinguishing system 100 according to the embodiment. The drone fire extinguishing system 100 comprises a plurality of drone fire extinguishing apparatuses 1, a pump truck 2, and a pump 3. The pump truck 2 and the pump 3 pressurize fire extinguishing liquid obtained from a water source (lake, river, water tank, etc.) and supply it to the drone fire extinguishing apparatus 1 via a water flow hose 4.

The drone fire extinguishing apparatus 1 is capable of flying in the air and can discharge the fire extinguishing liquid stored in its water storage unit at a fire scene. The apparatus can also connect its linking hose 10 to another drone fire extinguishing apparatus 1 and supply fire extinguishing liquid to the other apparatus through the linking hose 10. The drone fire extinguishing apparatus 1 can assume the following four states:

### (Standby State)

The standby state is when no fire has occurred, and the apparatus is on standby in the drone base 5. In Fig. 1, the drone fire extinguishing apparatus 1 in the standby state is shown as 1a.

### (Water Discharge State)

The water discharge state is when the apparatus is discharging water above the fire source where a fire is occurring. In Fig. 1, the drone fire extinguishing apparatus 1 in the water discharge state is shown as 1b.

### (Linked State)

The linked state is a state that can be assumed when, for example, the distance to the fire source is too great for the water flow hose 4 to allow the drone fire extinguishing apparatus 1b to reach the destination. In this linked state, the apparatus functions solely as an intermediate linking machine that supplies water to the drone fire extinguishing apparatus 1b using the linking hose 10 to position 1b above the fire source. In Fig. 1, the drone fire extinguishing apparatus 1 in the linked state is shown as 1c.

### (Linked Water Discharge State)

The linked water discharge state combines both the water discharge state and the linked state. The drone fire extinguishing apparatus 1 in the linked water discharge state supplies water to another drone fire extinguishing apparatus 1 using its linking hose 10 while also discharging water above the fire source itself. In Fig. 1, the drone fire extinguishing apparatus 1 in the linked water discharge state is shown as 1d. In the following description, the drone fire extinguishing apparatus 1 closer to the side that pressurizes water (such as the pump truck 2 or pump 3) is referred to as the base end side, and the drone fire extinguishing apparatus 1 closer to the fire source is referred to as the tip end side. In Fig. 1, the water discharge state drone fire extinguishing apparatus 1b is on the tip end side when viewed from the linked state drone fire extinguishing apparatus 1c. The linked state drone fire extinguishing apparatus 1c is on the base end side when viewed from the linked water discharge state drone fire extinguishing apparatus 1d.

In large-scale fire scenes such as woodlands and forests, drone-type fire extinguishing apparatuses that store pumped water and discharge it at the destination (and then return to fetch more water) may not have sufficient water storage capacity. To perform functions equivalent to a fire truck, an enormous number of such drone-type apparatuses would be required.

Furthermore, attempting to keep a drone-type fire extinguishing apparatus flying for a long time requires a larger drive battery, which increases the overall weight of the apparatus and limits the extension of flight time and distance. Charging time per cycle also increases. Although some drones generate power using gasoline engines, it is undesirable for a drone equipped with a gasoline tank to fly above a forest fire scene due to the risk of ignition from high heat or flying embers.

The drone fire extinguishing apparatus 1 of the present embodiment is equipped with a hydroelectric power generation unit and a storage battery. After firefighters manually connect the water flow hose 4 extended from the pump truck 2 or pressurizing pump 3 to the drone fire extinguishing apparatus 1 and start supplying water, the water pressure causes the hydroelectric power generation unit inside the drone fire extinguishing apparatus 1 to operate and continuously charge the storage battery. As long as the water flow volume and duration are secured, the apparatus can continue to store in the battery the electric power needed for flight. In addition, by continuously supplying water via the water flow hose 4 from the pump truck 2 or pressurizing pump 3, the flow of fire extinguishing water discharged from the drone fire extinguishing apparatus 1 is not interrupted, making it possible to extend flight time and distance until all fire sources are completely extinguished.
Fig. 2 is a diagram illustrating the structure of the drone fire extinguishing apparatus according to the embodiment. The drone fire extinguishing apparatus 1 comprises a flyable drone unit 11, an upper water storage tank 12, and a lower water storage tank 13. The upper tank 12 is fixed to a rotary cylindrical water flow channel 14. The lower tank 13 is fixed to a fixed cylindrical water flow channel 15. Fig. 3 is a diagram illustrating the water flow channels.

The lower part of the rotary cylindrical water flow channel 14 and the upper part of the fixed cylindrical water flow channel 15 are joined in a non-contact structure by a freewheel-type upper/lower splitting device 16. Water does not leak from this joint. This structure allows the lower tank 13 to remain non-rotating even when the upper tank 12 is rotating.

The freewheel-type upper/lower splitting device 16 is freewheeling (free in the clockwise direction in this embodiment) with respect to the fixed cylindrical water flow channel 15, so it rotates clockwise without resistance.

A hose connection pipe 15a is connected to the fixed cylindrical water flow channel 15. The water flow hose 4 or the linking hose 10 of another drone fire extinguishing apparatus 1 can be connected to this hose connection pipe 15a.

The fixed cylindrical water flow channel 15 is provided with a water flow branching section 15b. Water flowing into the fixed cylindrical water flow channel 15 from the hose connection pipe 15a is branched by the water flow branching section 15b and guided to the upper tank 12 and the lower tank 13.
Fig. 4 is a diagram illustrating the drone unit according to the embodiment. The drone unit 11 has rotary wings 11a and a fixed part 11b connected by a drone fixing shaft 11c. The rotary wings 11a generate lift. The fixed part 11b is provided with a drone control unit 11d and a communication module 11e.

The drone control unit 11d includes a Raspberry Pi 5. The entire drone fire extinguishing apparatus 1 is controlled by this drone control unit 11d. For example, it controls the flight of the drone fire extinguishing apparatus 1. It is also possible to send instructions to each part according to an AI autonomous flight program to enable autonomous flight of the drone fire extinguishing apparatus 1.

The communication module 11e is connected to a network 50. The drone control unit 11d can transmit and receive data with a management terminal device (not shown) via the communication module 11e at predetermined timings. In response to operations on the operator's management terminal device, various information acquired by the drone fire extinguishing apparatus 1 can be sent to the management terminal device, or instructions can be sent from the management terminal device to each part of the drone fire extinguishing apparatus 1. The communication method is not particularly limited; examples include Wi-Fi communication and satellite internet service communication. The communication timing is also not particularly limited and may be real-time or at predetermined intervals. The drone control unit 11d has various accessories connected via an interface 107.

Examples of accessories include a GPS module (Global Positioning System) 11f, a wind direction and wind force sensor 11g, and an outside air temperature sensor 11h. The GPS module 11f may be a serial connection type or a USB connection type. The drone control unit 11d continuously acquires position information using the GPS module 11f during flight. The wind direction and wind force sensor 11g acquires wind direction and wind force. The outside air temperature sensor 11h acquires the temperature near the sensor.

Since the GPS module 11f can accurately identify the coordinates of the fire scene, the drone control unit 11d's autonomous flight program can position the drone fire extinguishing apparatus 1 above the fire source in a short time. The drone fire extinguishing apparatus 1 is also equipped with a storage battery 11i that supplies power for flight and various control units. Returning to Fig. 2 for further description, the upper water storage tank 12 includes an upper water storage tank body 12a, a hose storage unit 12b, a pressurizing solenoid valve 12c, and a hydroelectric power generation unit 12d. The upper tank body 12a of the embodiment is a hollow housing. Fig. 5 is a schematic plan view of the upper water storage tank and the lower water storage tank according to the embodiment.

The upper tank body 12a has an upper panel 121a. Along the circumference of this upper panel 121a, water spray holes 122a are provided that allow water to be ejected from inside the upper tank body 12a toward the drone unit 11 side. The upper tank body 12a is provided rotatably relative to the lower tank 13. The upper tank body 12a can store incoming water.

The linking hose 10 described earlier is stored in the hose storage unit 12b. Specifically, the upper tank body 12a functions as a hose reel body, and the linking hose 10 is wound around the upper tank body 12a. Fig. 5 shows the outer flange end and the inner winding portion of the hose storage unit 12b. The illustration of the linking hose 10 is omitted. Returning to Fig. 2 for further description.

The pressurizing solenoid valve 12c is connected to the end of the linking hose 10. The pressurizing solenoid valve 12c detects the water pressure inside the upper tank body 12a. In response to instructions from the drone control unit 11d, the pressurizing solenoid valve 12c pressurizes the water stored in the upper tank body 12a and causes it to flow into the linking hose 10.

The hydroelectric power generation unit 12d includes a water turbine (turbine) 121d and a generator (not shown) connected to the water turbine 121d. Water branched by the water flow branching section 15b strikes the water turbine 121d, causing it to rotate and drive the generator. The generated electricity is stored in the storage battery 11i.

The lower tank 13 is an example of a water discharge unit. The lower tank 13 includes an outer layer water storage tank 13a, an inner layer water storage tank 13b, a lower heat source detection sensor 13c, a lateral heat source detection sensor 13d, a monitoring camera 13e, and a discharge volume adjustment unit 13f.

The outer tank 13a and the inner tank 13b each have multiple water discharge holes. The lower tank 13 has a two-tank structure in which the outer tank 13a and the inner tank 13b are rotated to align their water discharge holes for discharging water.

The lower heat source detection sensor 13c is disposed at the lower part of the outer tank 13a. It detects a heat source (fire source). A heat-resistant and waterproof guard 131c is attached to the lower heat source detection sensor 13c.

The lateral heat source detection sensor 13d is disposed on the side of the outer tank 13a. It detects a heat source (fire source). A heat-resistant and waterproof guard 131d is attached to the lateral heat source detection sensor 13d. The monitoring camera 13e captures images around the drone fire extinguishing apparatus 1. The discharge volume adjustment unit 13f adjusts the amount of water discharged from the lower tank 13. Fig. 6 is a diagram illustrating the operation of the lower part of the water storage tank according to the embodiment.

Let R1 be the inner diameter of the outer tank 13a and R2 be the inner diameter of the inner tank 13b. Then R1 - R2 > 0. That is, the outer tank 13a is formed slightly larger than the inner tank 13b, and the inner tank 13b is housed inside the outer tank 13a.

The rotation angle of the inner tank 13b can be expressed as (360/n/2) ≥ rotation angle ≥ 0. That is, the inner tank 13b rotates and reverses within the range satisfying the above formula. Here, n is the number of rows of water discharge holes provided in the outer tank 13a and the inner tank 13b. In Fig. 6, the rows are indicated by dotted lines. The number of rows of water discharge holes and the positions and intervals of the holes in each row are the same for both the outer tank 13a and the inner tank 13b.

In Fig. 6, the upper right shows the lower tank 13 when the rotation angle is (360/n/2). At this time, the water discharge holes of both tanks are closed relative to each other, resulting in a water-stopped state. The lower right in Fig. 6 shows the lower tank 13 when the rotation angle is 0. At this time, the positions of the water discharge holes of both layers completely coincide, resulting in the maximum discharge volume. The discharge volume adjustment unit 13f can adjust the discharge volume by adjusting this rotation angle. The outer tank 13a, the inner tank 13b, and the discharge volume adjustment unit 13f form the main part of the control mechanism that controls the amount of water discharged.
Next, an example of the operation of the drone fire extinguishing apparatus 1 according to the embodiment will be described.

### (Operation Example 1)

Operation Example 1 is an example in which fire extinguishing is performed using a single drone fire extinguishing apparatus 1. The following steps are provided for convenience of explanation. The operations and order are examples, and some operations may be omitted or other operations may be added.

[Step S1] With the tip of the water flow hose 4 extending from the pump truck 2 or pressurizing pump 3 connected to the end of the hose connection pipe 15a, the drone fire extinguishing apparatus 1 starts flying toward the fire source. At the start of flight, the water discharge holes of both tanks in the lower tank 13 are closed relative to each other, in a water-stopped state.

[Step S2] Water is sent from the pump truck 2 or pressurizing pump 3 during flight. Water flowing in from the hose connection pipe 15a is branched by the water flow branching section 15b to the upper tank 12 and the lower tank 13.

[Step S3] The force of the water flowing into the upper tank body 12a rotates the water turbine 121d, causing the hydroelectric power generation unit 12d to generate electricity. The generated electricity charges the storage battery 11i, and the apparatus continues flight and operation of other electrical equipment using this electricity.

[Step S4] Meanwhile, water flowing into the lower tank 13 falls to the bottom of the inner tank 13b and fills it. As the water level rises and the inner tank 13b becomes full, the upper tank body 12a is also filled upward. The water pressure near the upper part of the upper tank body 12a rises sharply, causing water to gush vigorously from the water spray holes 122a, creating a fountain. This fountain cools the swirling hot air rising from the fire scene as it contacts the various devices and rotary wings 11a installed on the fixed part 11b, thereby protecting the various devices and rotary wings 11a from heat damage. When water spreads throughout the upper tank body 12a, the pressurizing solenoid valve 12c detects the full-water pressure.

[Step S5] The drone control unit 11d can confirm the fire source using the lower heat source detection sensor 13c, the lateral heat source detection sensor 13d, and the monitoring camera 13e. Upon arrival above the fire source, the drone control unit 11d operates the discharge volume adjustment unit 13f to set the rotation angle to 0. This causes the water discharge holes of both layers to completely coincide, resulting in the maximum discharge volume. The water stored in the inner tank 13b is discharged from the discharge holes toward the fire source like rainfall, extinguishing the fire.

[Step S6] When the drone control unit 11d confirms that the fire has been extinguished using the lower heat source detection sensor 13c, the lateral heat source detection sensor 13d, and the monitoring camera 13e, it sends a fire extinguishment completion notice to the management terminal device via the communication module 11e. Upon receiving the completion notice, the water supply from the pump truck 2 or pressurizing pump 3 is stopped. The drone fire extinguishing apparatus 1 returns to the drone base 5 in a lighter state with the upper tank 12 and lower tank 13 empty.

### (Operation Example 2)

Operation Example 2 is an example in which fire extinguishing is performed using multiple drone fire extinguishing apparatuses 1.

[Step S11] When using multiple drone fire extinguishing apparatuses 1, the tip of the water flow hose 4 extending from the pump truck 2 or pressurizing pump 3 is connected to the hose connection pipe 15a of the base-end-side drone fire extinguishing apparatus 1. Then, the linking hose 10 of the base-end-side drone fire extinguishing apparatus 1 is connected to the hose connection pipe 15a of the tip-end-side drone fire extinguishing apparatus 1, and flight is started. At the start of flight, the linking hose 10 may remain stored in the hose storage unit 12b or may be pulled out from the hose storage unit 12b. The basic operation thereafter is the same as in Operation Example 1.

When flight starts with the linking hose 10 stored in the hose storage unit 12b and the drone fire extinguishing apparatuses 1 later move apart, the linking hose 10 of the base-end-side drone fire extinguishing apparatus 1 is pulled by the tip-end-side drone fire extinguishing apparatus 1. At this time, the upper tank body 12a, the hose storage unit 12b, and the rotary cylindrical water flow channel 14 of the base-end-side apparatus rotate together as one unit. Since the freewheel-type upper/lower splitting device 16 built into the rotary cylindrical water flow channel 14 is freewheeling (free in the clockwise direction) relative to the fixed cylindrical water flow channel 15, the upper tank body 12a rotates clockwise without resistance, and the linking hose 10 is paid out and extends forward.

When the pressurizing solenoid valve 12c of the base-end-side drone fire extinguishing apparatus 1 detects that the upper tank body 12a is full by sensing the internal water pressure, it pressurizes the water stored in the upper tank body 12a in accordance with instructions from the drone control unit 11d and causes it to flow into the linking hose 10. The water passing through the linking hose 10 flows into the fixed cylindrical water flow channel 15 of the tip-end-side drone fire extinguishing apparatus 1 from its hose connection pipe 15a.

When multiple drone fire extinguishing apparatuses 1 are linked, the optimal arrangement (which apparatuses should be in water discharge state, linked state, or linked water discharge state) depends on the position of the fire sources. This is calculated and decided by the autonomous flight program of the drone control unit 11d. The drone fire extinguishing system for wide-area forest and woodland fires can significantly reduce the need for firefighters to perform direct fire extinguishing activities, thereby enhancing human safety. Of course, it can also be used for large-scale building fires and factory fires.

Furthermore, in the linked state, if the lower tank 13 of the drone fire extinguishing apparatus 1 is placed on the top branches of an unburned tree and hovers there, consumption of the storage battery 11i can be suppressed. Similarly, if the linking hose 10 is hung on branches of unburned trees, the weight of the linking hose 10 on both the tip-end-side and base-end-side apparatuses can be reduced. Keeping the linking hose 10 nearly horizontal also allows smoother water flow.

The method of using branches of unburned trees is made possible by detecting unburned tree branches with the lower heat source detection sensor 13c, lateral heat source detection sensor 13d, and monitoring camera 13e, detecting the position of the branches with the GPS module 11f, and moving the linking hose 10 to the detected position using the AI autonomous flight program of the drone control unit 11d. It is also possible to connect or disconnect the linking hose 10 to/from another drone fire extinguishing apparatus 1 during flight. For example, consider the case where fire extinguishing activities are completed and the linking hose 10 is recovered while being wound onto the linked-state drone fire extinguishing apparatus 1.

If the freewheel of the hose storage unit 12b is in the locked state, the upper tank body 12a of the drone fire extinguishing apparatus 1 rotates counterclockwise together with the drone unit 11, thereby winding the linking hose 10 around the hose storage unit 12b for storage. At the same time, the tip-end-side drone fire extinguishing apparatus 1 also flies closer. Next, the attachment and detachment of the linking hose and the hose connection pipe will be described. Fig. 7 is a diagram illustrating a method of connecting a linking hose and a hose connection pipe according to the embodiment.

A connection convex portion 10a is provided at the tip of the linking hose 10. A connection concave portion 151a is provided at the base end of the hose connection pipe 15a. The connection convex portion 10a is inserted into the connection concave portion 151a and connected or separated by a twisting motion. The connection convex portion 10a includes a coupling guide rod 10a1 and a drop-off prevention ball 10a2.

As shown in the enlarged view, the coupling guide rod 10a1 is inserted from the coupling guide opening 151a2 of the L-shaped coupling guide 151a1 provided in the connection concave portion 151a, advances straight for distance a, and then, when rotated 90 degrees clockwise, is twisted for distance b and stops. At this time, since length c > length d, the connection convex portion 10a and the connection concave portion 151a achieve increased tightness, and the drop-off prevention ball 10a2 further stabilizes the connection. The coupling guide rod 10a1 is also provided at 180 degrees opposite, but the connection method is the same.

To disconnect, the reverse operation is performed. When the linking hose 10 is completely wound up, the connection between the connection convex portion 10a of the linking hose 10 and the connection concave portion 151a can be separated by the twisting motion of the other drone fire extinguishing apparatus 1.

All aerial operations of this drone are controlled by the programmed drone control unit 11d, the monitoring camera 13e, the lower heat detection sensor 13c, and the lateral heat source detection sensor 13d. Therefore, no human hands are required for connecting the drone fire extinguishing apparatuses 1 to each other, freeing firefighters from dangerous work at the fire scene.

Although Fig. 7 illustrates the connection method for the linking hose 10 and the hose connection pipe 15a, the same method applies to the connection between the water flow hose 4 and the hose connection pipe 15a.

As described above, according to the drone fire extinguishing system 100 of the embodiment, the drone fire extinguishing apparatus 1 comprises a drone unit 11, an upper water storage tank 12 that stores water to be supplied to a tip-end-side drone fire extinguishing apparatus 1, and a lower water storage tank 13 connected to the upper water storage tank 12 and having a plurality of discharge holes for discharging the stored water. The device can selectively assume a linked state (first state) in which it supplies water to the tip-end-side drone fire extinguishing apparatus 1 without discharging water from the lower water storage tank 13, a water discharge state (second state) in which it discharges water from the lower water storage tank 13 without supplying water to another drone fire extinguishing apparatus, and a linked water discharge state (third state) in which it discharges water from the lower water storage tank 13 while supplying water to the tip-end-side drone fire extinguishing apparatus. Therefore, it is possible to extinguish fires at multiple locations.

In recent years, forest and woodland fires have occurred frequently in various parts of the world. When a forest fire occurs, the first ignition site must be extinguished in a short time; otherwise, flying embers carried by the wind will ignite other parts of the forest. In recent years, more than 8 million hectares of forest have been lost annually worldwide, nearly double the area lost 20 years ago. Global warming is said to be a cause of the increase in forest fires, but if so, it will be difficult to reduce the burned area in the near term.

Since there is no effective way to prevent forest fires, the conventional approach when a fire occurs is to bring as many fire trucks and firefighters as possible close to the site and discharge large volumes of water. Helicopters and fixed-wing aircraft are also used to repeatedly discharge large volumes of water from above the fire scene, but increasing the number of aircraft is not easy due to the risk of collision accidents. The difficulties of fire extinguishing activities at forest fire scenes include the following three points: (Difficulty 1) When fire sources are scattered, the risk to firefighters' lives increases accordingly. (Difficulty 2) Because it is difficult to secure a stable and sufficient supply of fire extinguishing water, continuous long-duration discharge at the fire source is not possible.

(Difficulty 3) Due to Difficulties 1 and 2, if a new fire starts from flying embers at another location, rapid response to the new fire source is not possible. For any fire, extinguishing it as quickly as possible after ignition is truly a race against time.

The drone fire extinguishing apparatus 1 of the embodiment can simultaneously solve the above three difficulties by using drones. Although several fire extinguishing apparatuses using drones already exist, the drone fire extinguishing apparatus 1 is functionally superior in the following respects.

The drone fire extinguishing apparatus 1 can assume three states during flight with a single unit: water discharge state, linked state, and linked water discharge state. In the water discharge state, it can continuously discharge water from above the fire source. In the linked state, it can function solely as a water-passing intermediate linking machine to extend the fire extinguishing hose.

In actual woodland and forest fire scenes, fire sources are scattered in various locations, so the conventional method of lining up drones linearly for water discharge has limited effectiveness. In contrast, by using the drone fire extinguishing apparatus 1 as a linking machine, water-discharging or linked-water-discharging drone fire extinguishing apparatuses 1 can be arranged in a zigzag pattern above multiple fire scenes, enabling response to wide-area, multi-point fires. The optimal placement of the drone fire extinguishing apparatuses 1 at the fire scene and the best combination of water discharge, linked, and linked water discharge states can be fully automated by the GPS module 11f and the drone control unit 11d built into the apparatuses. Therefore, firefighters do not need to approach scattered fire sources, which is also excellent from the standpoint of ensuring human safety.

To operate a drone, power must be supplied either by extending a power line from a distant power source or by using an internal storage battery. When using a power line, it must be integrated inside or outside the fire extinguishing hose, but in either case, the weight of the hose increases, reducing operational efficiency. Additionally, in the event of an unexpected situation at the fire scene that interrupts power supply, the drone may lose power and fall to the ground. On the other hand, ensuring long-duration flight using only the drone's internal storage battery requires a large-capacity battery, which increases weight and necessitates a larger, more expensive drone. Even a large-capacity battery has a limited flight time, and when power is low, the drone must return to a charging base, interrupting fire extinguishing activities during that time. To avoid this, the number of drones must be increased, which significantly raises costs. In contrast, the drone fire extinguishing apparatus 1 has a hydroelectric power generation unit 12d. The flowing water from the water flow hose 4 or linking hose 10 serves both as fire extinguishing discharge water and as hydraulic power to rotate the water turbine 121d of the hydroelectric power generation unit 12d. The storage battery 11i is continuously charged by the electricity generated by the hydroelectric power generation unit 12d. Therefore, as long as the water turbine 121d is rotating, there is no limit to the flight time of the drone fire extinguishing apparatus 1. This also means there is no limit to the fire extinguishing water discharge time.

The drone fire extinguishing apparatus of the present invention has been described above based on the illustrated embodiment. However, the present invention is not limited thereto, and the configuration of each part may be replaced with any configuration having a similar function. In addition, any other components or processes may be added to the present invention. The above merely illustrates the principles of the present invention. Furthermore, many modifications and changes are possible for those skilled in the art. The present invention is not limited to the precise configurations and applications shown and described above. All corresponding modifications and equivalents are to be considered within the scope of the present invention as defined by the appended claims and their equivalents.

The processing functions described above can be realized by a computer. In that case, a program describing the processing content of the functions possessed by the drone control unit 11d is provided. By executing the program on a computer, the processing functions are realized on the computer. The program describing the processing content can be recorded on a computer-readable recording medium. Examples of computer-readable recording media include magnetic storage devices, optical disks, magneto-optical recording media, and semiconductor memory. Magnetic storage devices include hard disk drives, flexible disks (FD), and magnetic tape. Optical disks include DVD, DVD-RAM, and CD-ROM/RW. Magneto-optical recording media include MO (Magneto-Optical disk).

When distributing the program, for example, a portable recording medium such as a DVD or CD-ROM on which the program is recorded is sold. The program may also be stored in a storage device of a server computer and transferred from the server computer to another computer via a network.

A computer that executes the program stores, in its own storage device, the program recorded on a portable recording medium or the program transferred from a server computer. The computer then reads the program from its own storage device and executes processing according to the program. The computer can also read the program directly from the portable recording medium and execute processing according to the program. The computer can also sequentially execute processing according to the received program each time the program is transferred from a connected server computer via a network.

In addition, at least part of the above processing functions can be realized by electronic circuits such as a DSP (Digital Signal Processor), an ASIC (Application Specific Integrated Circuit), or a PLD (Programmable Logic Device).

### REFERENCE SIGNS LIST

1, 1a, 1b, 1c, 1d: drone fire extinguishing apparatus; 10: linking hose; 10a: connection convex portion; 10a1: coupling guide rod; 11: drone unit; 11a: rotary wing; 11b: fixed part; 11c: drone fixing shaft; 11d: drone control unit; 11e: communication module; 11f: GPS module; 11g: wind direction and wind force sensor; 11h: outside air temperature sensor; 11i: storage battery; 12: upper water storage tank; 12a: upper water storage tank body; 121a: upper panel; 121b: water spray hole; 12b: hose storage unit; 12c: pressurizing solenoid valve; 12d: hydroelectric power generation unit; 121d: water turbine; 13: lower water storage tank; 13a: outer layer water storage tank; 13b: inner layer water storage tank; 13c: lower heat source detection sensor; 13d: lateral heat source detection sensor; 13e: monitoring camera; 13f: discharge volume adjustment unit; 14: rotary cylindrical water flow channel; 15: fixed cylindrical water flow channel; 15a: hose connection pipe; 151a: connection concave portion; 15b: water flow branching section; 16: freewheel-type upper/lower splitting device; 2: pump truck; 3: pressurizing pump; 4: water flow hose; 5: drone base; 100: drone fire extinguishing system.

## Claims

1. A drone fire extinguishing apparatus comprising: a flyable drone unit; a first water storage unit that stores fire extinguishing liquid to be supplied to another drone fire extinguishing apparatus; and a second water storage unit connected to the first water storage unit and having a plurality of discharge holes for discharging the fire extinguishing liquid stored therein, wherein the drone fire extinguishing apparatus selectively assumes a first state in which fire extinguishing liquid is supplied to another drone fire extinguishing apparatus without discharging the fire extinguishing liquid from the second water storage unit, a second state in which fire extinguishing liquid is discharged from the second water storage unit without supplying the fire extinguishing liquid to another drone fire extinguishing apparatus, and a third state in which fire extinguishing liquid is discharged from the second water storage unit while supplying the fire extinguishing liquid to another drone fire extinguishing apparatus, and.

2. The drone fire extinguishing apparatus according to claim 1, further comprising: a connection unit for connecting a hose that supplies fire extinguishing liquid to the first water storage unit and the second water storage unit; and a linking hose that takes in the fire extinguishing liquid stored in the first water storage unit from one end and has the other end connected to the connection unit of another drone fire extinguishing apparatus to supply the taken-in fire extinguishing liquid to the other drone fire extinguishing apparatus.

3. The drone fire extinguishing apparatus according to claim 2, wherein the linking hose is wound around the first water storage unit so as to surround it, and the linking hose is paid out or wound up by rotation of the first water storage unit.

4. The drone fire extinguishing apparatus according to claim 1, wherein the second water storage unit has a two-tank structure that discharges the fire extinguishing liquid by rotating to align the positions of the discharge holes provided in each tank.

5. The drone fire extinguishing apparatus according to claim 1, wherein, in a plan view, the drone unit is disposed inside the first water storage unit, and a surface of the first water storage unit on the drone unit side is provided with water spray holes capable of ejecting the fire extinguishing liquid from inside the first water storage unit.

6. The drone fire extinguishing apparatus according to claim 1, further comprising a storage battery and a power generation unit disposed in the first water storage unit and equipped with a water turbine, wherein, during flight, the water turbine is rotated according to the force of the fire extinguishing liquid supplied from the hose connected to the connection unit, thereby causing the power generation unit to generate electric power, and the generated electric power is stored in the storage battery.
